# EUROPÄISCHE PATENTSCHRIFT

(11) **EP 0 522 093 B1**
(45) Veröffentlichungstag und Bekanntmachung des Hinweises auf die Patenterteilung: **10.12.1997**
(21) Anmeldenummer: 91911380.3
(22) Anmeldetag: 19.06.1991
(51) Int. Cl.: D21F 1/32, B65G 45/22

(54) **VERFAHREN UND VORRICHTUNG ZUM REINIGEN EINES UMLAUFENDEN PAPIERMASCHINENSIEBES**
METHOD AND DEVICE FOR CLEANING AN ENDLESS WIRE CLOTH ON A PAPERMAKING MACHINE
PROCEDE ET DISPOSITIF POUR LE NETTOYAGE D'UNE TOILE SANS FIN DE MACHINE A PAPIER

(30) Priorität: 18.01.1991 DE 4101350
(43) Veröffentlichungstag der Anmeldung: 13.01.1993
(73) Patentinhaber: J.M. Voith GmbH, D-89522 Heidenheim (DE)
(72) Erfinder: KOTITSCHKE, Gerhard, D-7924 Steinheim (DE); KOLB, Otmar, D-7923 Zang (DE)
(74) Vertreter: Weitzel, Wolfgang, Dr.-Ing.
(86) Internationale Anmeldenummer: EP9101129
(87) Internationale Veröffentlichungsnummer: WO9213132

(56) Entgegenhaltungen:
- DE-A- 2 058 461
- DE-C- 106 201
- FR-A- 2 220 621
- GB-A- 1 018 367
- GB-A- 2 127 326
- US-A- 1 406 821
- US-A- 4 154 648

## Beschreibung

Die Erfindung betrifft ein Verfahren zum Reinigen eines umlaufenden und zum Bilden einer Faserstoffbahn dienenden Siebes, insbesondere einer Papierbahn, sowie eine Siebpartie einer Maschine zum Herstellen von Faserstoffbahnen.

GB-A-1 018 367 offenbart eine Reinigungsvorrichtung für umlaufende endlose Filzbänder.

FR-A-2 220 621 offenbart eine Vorrichtung zum Reinigen und Entwässern eines umlaufenden Filzes mit zwei parallel zueinander, quer zur Laufrichtung des Filzes angeordneten und von diesem überstrichenen Leisten, deren Filzleitflächen in einem in Laufrichtung gelegenen Vertikalschnitt gesehen konvex gekrümmt sind. Die Vorrichtung weist ferner einen zwischen diesen Leisten vorgesehenen, wenigstens filzbreiten Schlitz auf, welcher an eine Blaseinrichtung angeschlossen ist, wobei die Krümmung der Filzleitfläche der beiden Leisten stärker als diejenige des Filzes im Bereich des Schlitzes bei eingeschalteter Blaseinrichtung ist.

GB-A-2 127 326 offenbart eine Reinigungsvorrichtung für umlaufende endlose Bänder, wobei auf diese eine Reinigungsflüssigkeit aufgetragen wird.

Die bekannten Verfahren bzw. Vorrichtungen haben erhebliche Nachteile. Es findet keine wirklich effiziente Reinigung des Siebes statt. Auch besteht bei der Anwendung auf Papiermaschinensieben die Gefahr einer Verschmutzung der Former, einer leichten Ablösung der Faserstoffbahn vom Siebband sowie des Auftretens von Dünnstellen in der entstehenden Faserstoffbahn.

Der Erfindung liegt somit die Aufgabe zugrunde, ein Verfahren gemäß dem Oberbegriff von Anspruch 1 bzw. eine Siebpartie gemäß dem Oberbegriff von Anspruch 3 anzugeben, wobei eine effiziente Reinigung erfolgt, keine Dünnstellen der Faserstoffbahn auftreten und keine Verschmutzung der Umgebung eintritt.

Diese Aufgabe wird durch die Merkmale der unabhängigen Ansprüche gelöst.

Die Erfindung beruht demgemäß auf dem Prinzip, daß eine Siebblaseinrichtung zur Reinigung eines umlaufenden endlosen Siebbandes der Abnahmestelle für die Faserstoffbahn in der Siebpartie nachgeordnet ist. Das Grundprinzip dieser zweistufigen Reinigung, Aufbringen von Reinigungsflüssigkeit und Durchdringen des umlaufenden endlosen Bandes mittels Druckluft, ist bereits aus der GB-A-1 018 367 für die Reinigung von Filzbändern bekannt. Erfindungsgemäß wird dieses Verfahren jedoch zur Reinigung von umlaufenden endlosen Siebbändern eingesetzt, wobei die Reinigung jedoch unmittelbar hinter der Abnahmestelle der Faserstoffbahn vom Siebband erfolgt. Die dazu verwendete Siebblaseinrichtung in Verbindung mit einer Wasserspritzeinrichtung ist an einer Stelle innerhalb einer Siebschlaufe angeordnet, an der die Papierbahn maschinenbreit von einem Blattbildungssieb abgenommen und in eine Gautschbruchbütte abgeführt werden soll, und zwar immer dann, wenn die Papierbahn nicht weiter in die Pressenpartie geführt werden soll. Die Siebblaseinrichtung in Verbindung mit der Wasserspritzeinrichtung erfüllt dort die folgenden Funktionen:
1. Beim Anfahren einer Blattbildungseinrichtung oder bei einer Produktionsunterbrechung wird die gesamte Faserstoffbahn, insbesondere Papierbahn gleichzeitig und sicher von dem Blattbildungssieb getrennt und das Sieb gleichzeitig gereinigt.
2. Während der normalen Produktion werden lediglich die auf dem Sieb abgespritzten Randstreifen vom Sieb getrennt und das gesamte Sieb gleichzeitig gereinigt. Der Hauptvorteil besteht darin, daß neben einer effektiven Siebreinigung eine geringere Verschmutzung der Former, eine leichtere Ablösung der Faserstoffbahn vom Siebband sowie weniger Löcher und dünne Stellen in der entstehenden Faserstoffbahn und einen höheren Wirkungsgrad der Papiermaschine erzielt werden.

Die erfindungsgemäße Durchführung des Verfahrens ermöglicht eine optimale Reinigung des umlaufenden endlosen Siebbandes in allen Betriebszuständen, insbesondere während der Anfahrphase einer Papiermaschine. Zusätzliche Einrichtungen, beispielsweise zur Ablösung der Faserstoffbahn vom Sieb, sind dann nicht mehr erforderlich. Diese Funktionen werden von einer einzigen Einrichtung bei entsprechender Anordnung ausgeführt.

Die Erfindung wird anhand der Zeichnung näher erläutert. Darin ist im einzelnen folgendes dargestellt:

Die Figuren 1 bis 4 zeigen in schematischen Darstellungen verschiedene Siebpartien für Papiermaschinen.

Die Figur 5 zeigt in vergrößerter Darstellung die eigentliche Vorrichtung gemäß der Erfindung mit Hochdruck-Blasdüse und mit einer Wasserspritzvorrichtung.

Die Figur 6 zeigt schematisch einen Teil einer Papiermaschinen-Siebpartie mit einer Siebreinigungsvorrichtung.

Die Figur 7 ist eine Teilansicht auf die Siebreinigungsvorrichtung in Richtung des Pfeiles II der Figur 6.

Die Figur 8 ist ein gegenüber Figur 6 vergrößerter und abgewandelter Teilquerschnitt durch die Siebreinigungsvorrichtung.

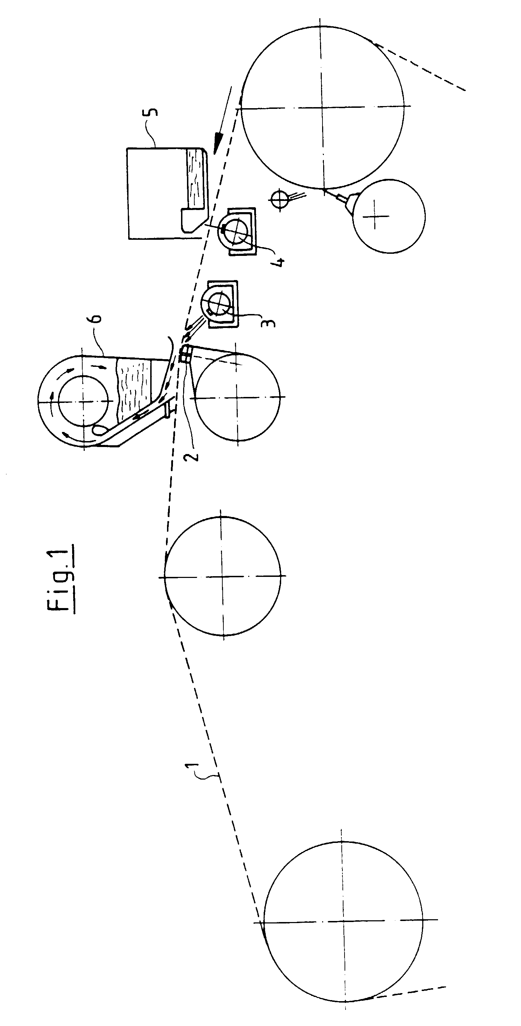

Die in Fig. 1 dargestellte Siebpartie weist ein Sieb 1 auf, das eine Reihe von Walzen umschlingt, und das sich in Pfeilrichtung bewegt. Die eigentliche Vorrichtung zum Reinigen umfaßt vor allem die Hochdruck-Blasdüse 2 sowie ein Spritzrohr 3 zum Aufbringen von Wasserstrahlen. Weitere Reinigungsorgane sind vorgeschaltet, so z.B. ein weiteres Spritzrohr 4, das Wasserstrahlen durch das Sieb 1 hindurchschickt. Die Wasserstrahlen werden in einer Absaughaube 5 aufgefangen.

Der eigentlichen, erfindungsgemäßen Reinigungseinrichtung 2, 3 ist eine Absaugeinrichtung 6 zugeordnet. Diese hat einen seitlichen Vakuumanschluß.

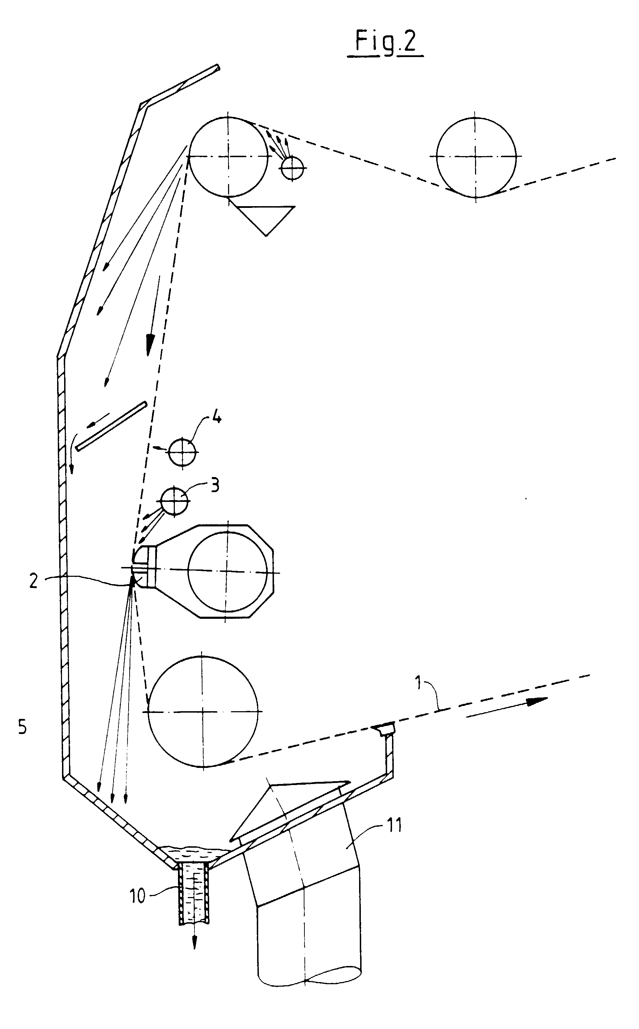

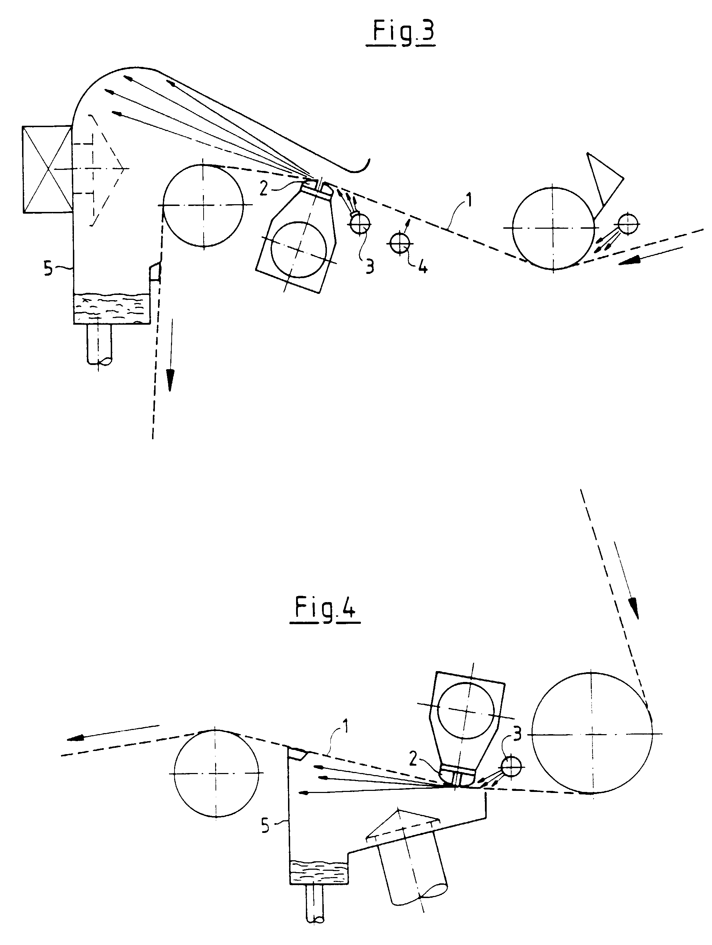

Bei der Einrichtung gemäß Fig. 2 sind wiederum Blasdüse 2 und Spritzrohr 3 - in diesem Falle ein Flachstahl-Spritzrohr - die Hauptkomponenten der Reinigungsvorrichtung. Diese beiden Komponenten sind auf der Innenseite des Siebes angeordnet, also innerhalb der aus dem Sieb 1 gebildeten Siebschlaufe. Auf der Außenseite ist eine Haube 5 vorgesehen, die einen Wasserablauf 10 hat, und die an ein Absaugrohr 11 angeschlossen ist. Dem Flachstrahl-Spritzrohr 3 ist ein Nadelstrahl-Spritzrohr 4 vorgeschaltet. Dieses ist zwar hilfreich, jedoch nicht entscheidend. Die Ausführungsformen gemäß der Figuren 3 und 4 stellen Abwandlungen dar. Wesentlich sind auch hierbei wiederum Hochdruck-Blasdüse 2 mit vorgeschaltetem Spritzrohr 3. Die Absaughauben 5 dienen gleichzeitig dem Auffangen des Spritzwassers, sowie dem Besaugen. Sie haben entsprechende Anschlüsse, genau wie die Ausführungsform gemäß Fig. 2.

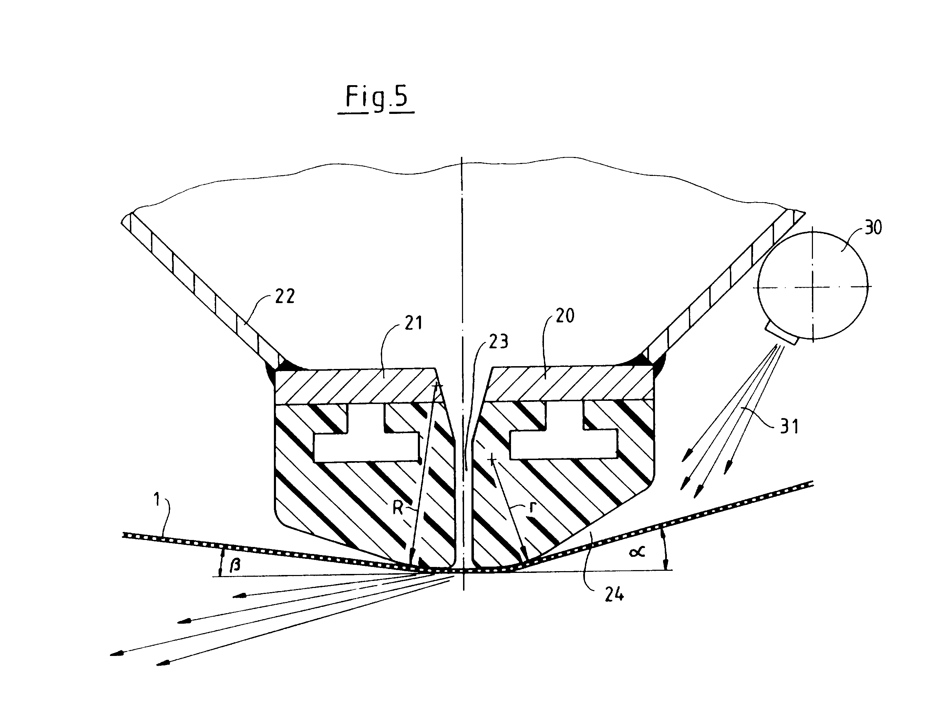

Aus Fig. 5 erkennt man sehr genau den Aufbau der Hochdruck-Blasdüse. Sie umfaßt eine Auflaufleiste 20, eine Ablaufleiste 21 und ein Druckrohr 22. Diese drei genannten Komponenten, die eine Baueinheit bilden, erstrecken sich über die gesamte Maschinenbreite, so daß das Sieb 1 auf seiner gesamten Breite gereinigt wird. Auflaufleiste 20 und Ablaufleiste 21 bilden einen Blasschlitz 23. Dieser kann sich ohne Unterbrechungen über die gesamte Siebbreite erstrecken. Er kann jedoch auch unterbrochen sein. Er kann beispielsweise durch eine Vielzahl von Bohrungen ersetzt sein, die sich ebenfalls über die gesamte Siebbreite erstrecken.

Entscheidend ist die Gestalt der Auflaufleiste 20 und die Führung des Siebes 1. Wie man sieht, bilden diese beiden einen Winkel α miteinander. Im vorliegenden Falle beträgt der Winkel α etwa 30°. Der zwischen diesen beiden gebildete keilförmige Zwickel 24 verjüngt sich somit in Sieblaufrichtung.

Dem Zwickel 24 ist ein Spritzrohr 30 vorgeschaltet. Dieses ist derart angeordnet, daß es Spritz- oder Sprühstrahlen 31 von Wasser dem Zwickel 24 direkt oder indirekt zuführt. Die Zufuhr kann unter mehr oder minder hohem Druck erfolgen.

Die beiden Leisten 20 und 21 sind zumindest auf ihrer siebberührten Fläche aus verschleißfestem Werkstoff gebildet, z.B. aus Keramik.

Das Sieb läuft auf der Auflaufleiste 20 auf, das an dieser Stelle einen Radius von ca. 10 bis 50 mm hat. Durch die Siebumlenkung an diesem Radius wird das Sieb infolge der Fliehkraft bereits entwässert.

Der Blasschlitz 23 hat eine Weite von 1 bis 10 mm.

Die ablaufende Leiste 21 bildet im Ablaufbereich ebenfalls einen Radius. Hierdurch wird dafür gesorgt, daß das Sieb infolge des Luftdruckes von dieser Leiste nicht abgehoben wird, so daß die Blasluft nicht entweichen kann. Der erforderliche Radius an der ablaufenden Leiste 21 ist von Betriebsparametern, wie Luftdruck, Siebdurchlässigkeit, Siebspannung und anderem, abhängig. Er ist so zu wählen, daß der verbleibende Anpreßdruck des Siebes gegen die Umlenkfläche der Ablaufleiste 21 minimal ist, so daß der Leistenverschleiß und der Siebverschleiß ebenfalls minimal bleiben.

Die Steuerung ist so ausgeführt, daß bei Wasserausfall die Luft sofort abgeschaltet wird, und daß die Blasdüse - mit geringer Zeitverzögerung - aus dem Sieb herausgeschwenkt wird.

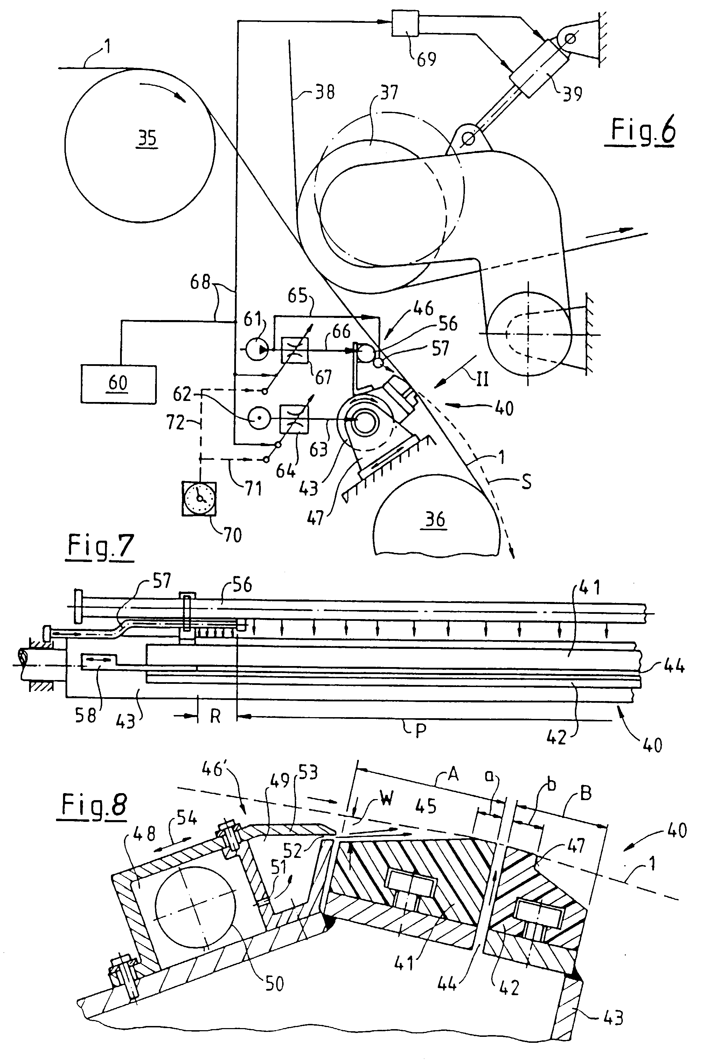

In Fig. 6 erkennt man ein endloses umlaufendes Sieb 1, das in bekannter Weise über eine Siebsaugwalze 35 und von dort über eine Siebreinigungsvorrichtung 40 zu einer Siebleitwalze 36 läuft. Mit Hilfe eines endlosen Filzes 38 und einer Abnahmesaugwalze 37 wird die auf dem Sieb 1 ankommende (und noch nasse) Papierbahn im Normalbetrieb vom Sieb abgenommen und der nachfolgenden (nicht dargestellten) Pressenpartie zugeführt. Während der Anfahr-Phase oder bei einer Betriebsstörung wird die Abnahmesaugwalze 37 mit Hilfe von Hydraulikzylindern 39 in bekannter Weise vom Sieb 1 abgehoben (wie mit strichpunktierten Linien dargestellt). In diesem Betriebszustand läuft die Bahn mit dem Sieb 1 bis zur Siebreinigungsvorrichtung 40, wird von dieser vom Sieb abgelöst und läuft dann ungefähr entlang der gestrichelten Linie S nach unten in eine nicht dargestellte Ausschuß-Auflöseanlage.

Wie am besten aus Fig. 8 ersichtlich ist, hat die Siebreinigungsvorrichtung 40 eine Auflaufleiste 41 und eine Ablaufleiste 42, die mit je einer Siebleitfläche das umlaufende Sieb 1 berühren. Die Breite der Siebleitfläche der Auflaufleiste 41 ist mit a bezeichnet und die Breite der Siebleitfläche der Ablaufleiste mit b. Die zwei Siebleitflächen sind ungefähr gleich breit, während die Gesamtbreite A der Auflaufleiste nahezu doppelt so groß ist wie die Gesamtbreite B der Ablaufleiste. Die Siebleitflächen können überwiegend eben (mit abgerundeten Kanten) oder geringfügig konvex gekrümmt sein. Die Leisten 41 und 42 sind derart auf einem Tragkörper 43 befestigt, daß zwischen den beiden Leisten ein Luftblasschlitz 44 verbleibt. Der Tragkörper ist als ein zur Blasluft-Zufuhr dienender Hohlkörper ausgebildet. Zwischen der Auflaufleiste 41 und dem Sieb 1 ist ein keilförmiger und sich in Sieblaufrichtung verjüngender Zwickel 45 (mit Winkel w) gebildet. Eine Wasserspritzeinrichtung 46 spritzt über die ganze Siebbreite Wasserstrahlen in den Zwickel 45 hinein.

Die Ablaufleiste 42 hat an der Stelle, wo das Sieb 1 die Siebleitfläche verläßt, einen stufenartigen Rücksprung 47; dieser bildet mit der Siebleitfläche eine verhältnismäßig scharfe Ablaufkante, die das Sieb berühren muß. Durch diese Konfiguration wird erreicht, daß die vom Sieb freien Flächen der Ablaufleiste 42 weniger als bisher dazu neigen, daß sich Schmutz an ihnen ansetzt, der die Funktionstüchtigkeit der Siebreinigungsvorrichtung 40 beeinträchtigen könnte.

Durch die vergrößerte Gesamtbreite A der Auflaufleiste 41 ist der keilförmige Zwickel 45 (in Sieblaufrichtung) länger als bisher. Hierdurch besteht mehr als bisher die Möglichkeit, daß das Sieb 1 die von der Wasserspritzeinrichtung 46 kommenden Wasserstrahlen beschleunigt. Somit kann der Druck des zugeführten Wassers gegenüber bisher verringert und somit Energie eingespart werden. Damit in dieser Hinsicht optimale Verhältnisse eingestellt werden können, ist es zweckmäßig, den Winkel w zwischen Sieb 1 und Auflaufleiste 41 zu verändern, um ihn hierdurch insbesondere an die Siebgeschwindigkeit anzupassen. Zu diesem Zweck ist der Tragkörper 43 in Lagerböcken 47 schwenkbar abgestützt. Zusätzlich oder alternativ hierzu kann der Tragkörper 43 zusammen mit den Lagerböcken 47 in Richtung zum Sieb 1 oder zurück verschoben werden.

Gemäß Fig. 8 ist die insgesamt mit 46' bezeichnete Wasser-spritzeinrichtung gebildet aus zwei zueinander parallelen und sich quer zur Sieblaufrichtung erstreckenden Kammern; dies sind eine Verteilkammer 48, an die eine Wasserzuführleitung 50 angeschlossen ist, und eine Düsenkammer 49. Mehrere über die Länge der Kammern verteilte Kanäle 51 verbinden die Verteilkammer 48 mit der Düsenkammer 49. Hierdurch wird erreicht, daß die Wasser-Austrittsgeschwindigkeit über die Breite des Siebes 1 gleichmäßig ist. Abweichend von Fig. 3 könnte die Verteilkammer ersetzt werden durch ein Rohr, das über mehrere Leitungen, die den Kanälen 51 entsprechen, mit der Düsenkammer 49 verbunden ist.

An der Düsenkammer 49 kann eine Reihe einzelner Spritzdüsen vorgesehen werden. Alternativ hierzu ist gemäß Fig. 8 zwischen zwei Wänden der Düsenkammer ein Wasser-Austrittsspalt 52 gebildet. Falls es erwünscht ist, die Menge und/oder die Austrittsgeschwindigkeit des Wassers verändern zu können, kann man eine Wand 53 der Düsenkammer 49 (die zugleich eine Begrenzungswand der Verteilkammer 48 ist) in Richtung des Doppelpfeiles 54 hin- oder herschieben, um hierdurch die lichte Weite des Spaltes 52 zu verändern.

Gemäß den Figuren 6 und 7 umfaßt die Wasser-Spritzeinrichtung 46 ein Spritzrohr 56, das sich über die ganze Siebbreite erstreckt, und zusätzlich im Bereich der beiden Bahnränder je ein Randspritzrohr 57 (von denen in der Zeichnung nur eines sichtbar ist). Das Randspritzrohr 57 hat je Zentimeter Siebbreite eine größere Anzahl von Spritzdüsen, die über die Breite R des Randstreifens verteilt angeordnet sind. Bekanntlich wird in der Regel von der in der Siebpartie gebildeten Papierbahn an jedem der beiden Ränder ein Randstreifen abgetrennt, der im Normalbetrieb mittels der Siebreinigungsvorrichtung 40 vom Sieb 1 abgelöst werden muß. Nur die verbleibende Papierbahn mit der Breite P wird mittels des Filzes 38 weitertransportiert.

Mitunter kommt es vor, daß die Breite P der herzustellenden Papierbahn verändert werden soll. Damit die Siebreinigungsvorrichtung 40 an unterschiedliche Bahnbreiten P angepaßt werden kann, ist folgendes vorgesehen: Die Randspritzrohre 57 können parallel zum Blasschlitz 44 verschoben werden. Außerdem ist die (quer zur Sieblaufrichtung gemessene) Länge (P + 2R) des Blasschlitzes 44 veränderbar mit Hilfe von verstellbaren Randschiebern 58.

Die Fig. 6 zeigt noch die Steuerung der Hydraulikzylinder 39 der Abnahmesaugwalze 37 und die Steuerung der Luft- und Wasserzufuhr zur Siebreinigungsvorrichtung 40. Dargestellt ist eine zentrale Steuereinheit 60, eine Wasserpumpe 61 und eine Druckluftquelle 62. Eine Druckluftleitung 63 mit Druckregelventil 64 verbindet die Druckluftquelle 62 über den hohlen Tragkörper 43 mit dem Blasschlitz 44. Die Wasserpumpe 61 ist über eine Leitung 65 direkt mit dem Randspritzrohr 57 verbunden. Außerdem ist eine Leitung 66 mit Druckregelventil 67 vorgesehen zur Versorgung des Spritzrohres 56. Eine gemeinsame Steuerleitung 68 verbindet die Steuerzentrale 60 einerseits mit den Druckregelventilen 64 und 67 und andererseits mit einem die Hydraulikzylinder 39 steuernden Transmitter 69. Hierdurch kann folgendes erreicht werden: Während des Normalbetriebes (Abnahmesaugwalze 37 berührt das Sieb 1) wird der Siebreinigungsvorrichtung 40 Luft und Wasser mit relativ geringem Druck zugeführt. Eine Ausnahme bilden nur die Randspritzrohre 57, denen über die Leitung 65 Wasser mit hohem Druck zugeführt wird, so daß die Randstreifen sicher vom Sieb 1 entfernt werden. Sobald die Steuerzentrale 60 ein Signal abgibt zum Abheben der Abnahmesaugwalze 37 vom Sieb 1 (oder kurz zuvor), erfolgt selbsttätig ein Verstellen der Druckregelventile 64 und 67 derart, daß nunmehr Luft- und Wasser-Druck erhöht werden. Folglich ist die Siebreinigungsvorrichtung 40 sofort in die Lage versetzt, die gesamte Bahn (mit der Breite P+2R) vom Sieb 1 abzulösen. Durch diese Steuerung wird erreicht, daß bei Normalbetrieb der Luft- und Wasser-Verbrauch relativ gering ist und daß die Siebreinigungsvorrichtung 40 selbsttätig in den Zustand mit höherem Betriebsdruck versetzt werden kann, der beim Abheben der Abnahmesaugwalze 37 für das Ablösen der gesamten Bahn vom Sieb 1 erforderlich wird.

Eine weitere Möglichkeit zum Reduzieren des Luft- und/oder Wasser-Verbrauches bei Normalbetrieb besteht im folgenden: Ein Zeitrelais 70 kann über Leitungen 71 und/oder 72 mit den Druckregelventilen 64 und/oder 67 verbunden werden. Dieses Zeitrelais 70 kann in einstellbaren Zeitintervallen eine vorübergehende Drucksteigerung in den Leitungen 63 und/oder 66 auslösen. Hierdurch wird vorübergehend ein erhöhter Reinigungseffekt erzielt bei durchschnittlich geringem Luft- und Wasser-Verbrauch.

## Patentansprüche

1. Verfahren zum Reinigen eines umlaufenden und zum Bilden einer Faserstoffbahn (z.B. Papierbahn) dienenden Siebes einer Siebpartie und zum Ablösen der gesamten Faserstoffbahn (P+2xR) im Anfahrzustand bzw. zum Ablösen der abgespritzten Bahnränder, die nicht in die Pressenpartie überführt werden während der Produktionsphase, gekennzeichnet durch folgende Merkmale:
1.1 unmittelbar hinter der Stelle, an welcher im Normalbetrieb die Faserstoffbahn vom Sieb abgenommen und in eine Presseneinrichtung überführt wird, wird Flüssigkeit auf die Innenseite des umlaufenden Siebbandes aufgetragen;
1.2 der sich an der Innenseite angelagerte Flüssigkeitsfilm wird mittels Druckluft durch die Siebmaschen in Richtung Außenseite gedrückt;
1.3 im Normalbetrieb wird nur ein mittlerer Bereich der gebildeten Bahn, also ohne abgetrennte Bahnränder, vom Sieb zur Presseneinrichtung überführt, und das Auftragen der Flüssigkeit und die Zufuhr von Blasluft erfolgt über die gesamte Bahnbreite (P + 2 · R).

2. Siebpartie einer Maschine zur Herstellung von Faserstoffbahnen;
2.1 mit wenigstens einem umlaufenden, endlosen Siebband;
2.2 mit einer Vorrichtung zur Reinigung des Siebbandes;
2.3 die Vorrichtung zum Reinigen des umlaufenden endlosen Siebbandes umfaßt zwei zueinander parallele und sich quer zur Laufrichtung des Siebes (1) erstreckende Leisten, welche eine Auflaufleiste (41) und eine Ablaufleiste (42), die mit je einer Siebleitfläche das umlaufende Sieb (1) berühren, bilden, wobei
2.3.1 zwischen den beiden Leisten sich ein Blasschlitz (44) befindet, der an eine Druckluftquelle (62) angeschlossen ist;
2.3.2 zwischen der Auflaufleiste (20) und dem Sieb (1) ein keilförmiger, sich in Sieblaufrichtung verjüngender Zwickel (45) gebildet ist, in den eine Wasserspritzeinrichtung (46) mündet;
dadurch gekennzeichnet, daß
2.4 der Winkel zwischen dem Sieb (1) und der Auflaufleiste zwischen 10 und 45° liegt, vorzugsweise bei 30°.

3. Siebpartie nach Anspruch 2, dadurch gekennzeichnet, daß die Siebpartie eine Einrichtung zur Abnahme der Faserstoffbahn vom Siebband und Überführung in eine der Siebpartie nachgeordnete Pressenpartie umfaßt.

4. Siebpartie nach einem der Ansprüche 2 bis 3, dadurch gekennzeichnet, daß die Vorrichtung zum Reinigen des umlaufenden endlosen Siebbandes unmittelbar hinter der Stelle, an welcher im Normalbetrieb die Faserstoffbahn vom Sieb abgenommen und in eine Presseneinrichtung überführt wird, angeordnet ist.

5. Siebpartie nach einem der Ansprüche 2 bis 4, dadurch gekennzeichnet, daß die Spritzeinrichtung (3, 20) ein Düsenrohr mit Flachstrahldüsen ist.

6. Siebpartie nach einem der Ansprüche 2 bis 5, dadurch gekennzeichnet, daß der Blasschlitz (23) ein durchgehender Schlitz ist.

7. Siebpartie nach einem der Ansprüche 2 bis 5, dadurch gekennzeichnet, daß der Blasschlitz aus einer Vielzahl von Bohrungen oder einzelnen, aneinandergereihten Schlitzen gebildet ist.

8. Siebpartie nach einem der Ansprüche 2 bis 7, dadurch gekennzeichnet, daß die Ablaufleiste (42) an der Stelle, wo das Sieb (1) die Siebleitfläche verläßt, einen stufenartigen Rücksprung (47) aufweist.

9. Siebpartie nach einem der Ansprüche 2 bis 8, dadurch gekennzeichnet, daß die zwei Siebleitflächen der beiden Leisten (41, 42) im wesentlichen die gleiche Breite (A, B) haben, während die Gesamtbreite (A) der Auflaufleiste (41) das 1, 2- bis 3-fache der Gesamtbreite (B) der Ablaufleiste (42) beträgt.

10. Siebpartie nach einem der Ansprüche 2 bis 9, bei der die Leisten (41, 42) auf einem Tragkörper (43) ruhen, dadurch gekennzeichnet, daß der Tragkörper (43) - zwecks Änderung des Winkels (w) zwischen Sieb (1) und Auflaufleiste (41) um eine zum Blasschlitz (44) parallele Achse schwenkbar ist, und/oder daß der Tragkörper (43) in Richtung zum Sieb (1) und zurück verschiebbar ist.

11. Siebpartie nach einem der Ansprüche 2 bis 10, gekennzeichnet durch die folgenden Merkmale:
11.1 die Wasserspritzeinrichtung (46') ist gebildet durch zwei zueinander parallele und sich quer zur Laufrichtung des Siebes erstreckende Kammern, nämlich eine Verteilkammer (48) und eine Düsenkammer (49);
11.2 die Verteilkammer (48), an die eine Wasserzuführleitung (50, 66) angeschlossen ist, steht über mehrere, über die Länge der Kammern (d.h. über die Siebbreite) verteilte Kanäle (51) mit der Düsenkammer (49) in Verbindung, an der wenigstens eine Wasser-Spritzöffnung (52) vorgesehen ist.

12. Siebpartie nach Anspruch 11, dadurch gekennzeichnet, daß die Düsenkammer (49) unmittelbar vor der Auflaufleiste (41) liegt, und daß ein im wesentlichen stetiger Übergang von der Wasser-Spritzöffnung (52) zur Siebleitfläche der Auflaufleiste (41) vorgesehen ist.

13. Siebpartie nach einem der Ansprüche 11 oder 12, dadurch gekennzeichnet, daß die Düsenkammer (49) als Wasser-Spritzöffnung (52) einen schlitzartigen Spalt aufweist, dessen lichte Weite einstellbar ist.

14. Siebpartie nach einem der Ansprüche 1 bis 13, dadurch gekennzeichnet, daß die Wasser-Spritzeinrichtung (46) im Bereich der beiden Bahnränder je Zentimeter Siebbreite eine höhere Wassermenge abgibt als im mittleren Bereich.

15. Siebpartie nach Anspruch 14, dadurch gekennzeichnet, daß die Wasser-Spritzeinrichtung (46) ein sich über die ganze Siebbreite erstreckendes Spritzrohr (56) aufweist und zusätzlich im Bereich der beiden Bahnränder je ein Randspritzrohr (57), das parallel zum Blasschlitz (44) verschiebbar ist.

16. Siebpartie nach einem der Ansprüche 1 bis 15, gekennzeichnet durch die folgenden Merkmale:
(a) eine Steuereinrichtung (60, 64, 67) ist ausgebildet zum Steuern des Druckes der dem Blasschlitz (44) zugeführten Luft und/oder des der Spritzeinrichtung (64) zugeführten Wassers;
(b) die Steuereinrichtung (60, 64, 67) ist derart ausgebildet, daß sie eine Drucksteigerung auslöst, wenn oder kurz bevor die Abnahmeeinrichtung (37) vom Sieb (1) abhebt.

17. Siebpartie nach einem der Ansprüche 2 bis 16, mit einer Steuereinrichtung (64, 67) für den Druck der dem Blasschlitz (44) zugeführten Luft und/oder des der Spritzeinrichtung (64) zugeführten Wassers, dadurch gekennzeichnet, daß ein Zeitrelais (70) vorgesehen ist, das in einstellbaren Zeitintervallen eine vorübergehende Drucksteigerung auslöst.

## Claims

1. Method for cleaning a circulating machine wire of a wire section, which serves to form a fibrous material sheet (e.g. papre sheet), and for detaching the entire fibrous material sheet (P+2xR) in the starting state, or for detaching the sprayed sheet edges, which are not transferred into the pressing section, during the production phase, characterised by the following features:
1.1 directly behind the point where, during normal operation, the fibrous material sheet is removed from the machine wire and transferred into a pressing means, the liquid is applied to the inside of the circulating machine wire band;
1.2 the film of liquid deposited on the inside is pressed through the machine wire mesh towards the outside by means of compressed air;
1.3 during normal operation, only a central area of the formed sheet, i.e. without separated sheet edges, is transferred from the machine wire to the pressing means, and the application of the liquid and supply of blowing air is carried out over the entire width of the sheet (P+2·R).

2. Wire section of a machine for the production of fibrous material sheets;
2.1 with at least one circulating, endless machine wire band;
2.2 with a device for cleaning the machine wire band;
2.3 the device for cleaning the circulating endless machine wire band comprising two parallel battens running transversely to the running direction of the machine wire (1), said battens forming a run-on batten (41) and a run-off batten (42), which each touch the circulating machine wire (1) with a wire guide surface,
whereby
2.3.1 a blow slot (44) connected to a compressed air source (62) is located between the two battens;
2.3.2 a wedge-shaped gusset (45) tapering in the running direction of the machine wire, into which a water spraying system (46) feeds, is formed between the run-on batten (20) and the machine wire (1),
characterised in that
2.4 the angle between the machine wire (1) and the run-on batten lies between 10 and 45°, preferably at 30°.

3. Wire section according to Claim 2, characterised in that the wire section comprises a means for removing the fibrous material sheet from the machine wire band and transferring it into a pressing section disposed downline of the wire section.

4. Wire section according to one of Claims 2 to 3, characterised in that the device for cleaning the circulating endless machine wire band is disposed directly behind the point where, during normal operation, the fibrous material sheet is removed from the machine wire and transferred into a pressing means.

5. Wire section according to one of Claims 2 to 4, characterised in that the spraying system (3, 20) is a nozzle tube with fan jet nozzles.

6. Wire section according to one of Claims 2 to 5, characterised in that the blow slot (23) is a continuous slot.

7. Wire section according to one of Claims 2 to 5, characterised in that the blow slot is formed from a plurality of holes or individual slots arranged in a row.

8. Wire section according to one of Claims 2 to 7, characterised in that at the point where the machine wire (1) leaves the wire guide surface, the run-on batten (42) has a step-like offset (47).

9. Wire section according to one of Claims 2 to 8, characterised in that the two wire guide surfaces of the two battens (41, 42) have essentially the same width (A, B), while the total width (A) of the run-on batten (41) amounts to 1, 2 to 3-times the total width (B) of the run-off batten (42).

10. Wire section according to one of Claims 2 to 9, in which the battens (41, 42) rest on a support body (43), characterised in that - for the purpose of changing the angle (w) between the machine wire (I) and the run-on batten (41) -, the support body (43) may be pivoted around an axis parallel to the blow slot (44), and/or that the support body (43) may be displaced towards the machine wire (1) and back.

11. Wire section according to one of Claims 2 to 10, characterised by the following features:
11.1 the water spraying system (46') is formed by two parallel chambers extending transversely to the running direction of the machine wire, namely a distribution chamber (48) and a jet chamber (49);
11.2 the distribution chamber (48), to which a water supply pipe (50, 66) is connected, connects via several channels (51) distributed over the length of the chambers (i.e. over the width of the machine wire) with the jet chamber (49), on which at least one water spray opening (52) is provided.

12. Wire section according to Claim 11, characterised in that the jet chamber (49) lies directly in front of the run-on batten (41); and that an essentially constant transfer from the water spray opening (52) to the wire guide surface of the run-on batten (41) is provided.

13. Wire section according to one of Claims 11 or 12, characterised in that the jet chamber (49) has a slot-like gap as water spray opening (52), the inner width of which is adjustable.

14. Wire section according to one of Claims 1 to 13, characterised in that the water spraying system (46) discharges a higher quantity of water per centimetre of machine wire width in the region of both sheet edges than in the central area.

15. Wire section according to Claim 14, characterised in that the water spraying system (46) has a spray pipe (56) extending over the entire machine wire width, and additionally has a respective edge spray pipe (57), which is displaceable parallel to the blow slot (44), in the region of each of the two sheet edges.

16. Wire section according to one of Claims 1 to 15, characterised by the following features:
(a) a control means (60, 64, 67) is provided to control the pressure of the air supplied to the blow slot (44) and/or of the water supplied to the spraying system (64);
(b) the control means (60, 64, 67) is constructed so that it triggers a pressure rise when or shortly before the removing means (37) lifts from the machine wire (1).

17. Wire section according to one of Claims 2 to 16, with a control means (64, 67) for the pressure of the air supplied to the blow slot (44) and/or of the water supplied to the spraying system (64), characterised in that a time relay (70) is provided which triggers a temporary pressure rise at adjustable time intervals.

## Revendications

1. Procédé de nettoyage d'un tamis, placé en circulation et servant à constituer une bande de matériau fibreux (par exemple, une bande de papier), tamis compris dans une partie de tamisage et conçu pour désolidariser l'ensemble de la bande de matériau fibreux (P+2xR) à l'état de démarrage, respectivement pour désolidariser les bords, écartés par une projection, de la bande, bords ne devant pas être passés dans la partie de pressage pendant la phase de production, caractérisé par les particularités ci-après :
1.1 un liquide est appliqué sur la face intérieure de la bande de tamis en circulation, directement derrière l'endroit auquel, en fonctionnement normal, la bande de matériau fibreux est enlevée du tamis et transférée dans un dispositif de pressage;
1.2 le film de liquide s'étant accumulé sur la face intérieure est pressé, en faisant appel à de l'air comprimé, à travers les mailles du tamis, dans la direction de la face extérieure;
1.3 en fonctionnement normal, seule une zone centrale de la bande constituée, donc sans les bords, ayant été séparés, de la bande, est transférée du tamis au dispositif de pressage et l'application du liquide et l'apport d'air de soufflage s'effectuant sur toute la largeur (P + 2 R) de la bande.

2. Partie de tamisage d'une machine de fabrication de bandes de matériau fibreux;
2.1 comportant au moins une bande de tamisage continue, mise en circulation;
2.2 comportant un dispositif de nettoyage de la bande de tamis;
2.3 le dispositif de nettoyage de la bande de tamis continue mise en circulation comprenant deux bandes, parallèles entre elles et s'étendant transversalement par rapport à la direction de défilement du tamis (**1**), ces bandes constituant une bande d'amenée (**41**) et une bande d'évacuation (**42**), placées chacune en contact avec une face de guidage de tamis, prévue pour le tamis (**1**) mis en circulation,
2.3.1 une fente de soufflage (**44**) raccordée à une source d'air comprimé (**62**) est prévue entre les deux bandes;
2.3.2 un coin (**45**), allant en s'effilant dans la direction de défilement du tamis et d'allure cunéiforme, est constitué entre la bande d'amenée (**20**) et le tamis (**1**), coin dans lequel débouche un dispositif d'injection d'eau (**46**); caractérisée en ce que
2.4 l'angle fait entre le tamis (**1**) et la bande d'amenée est compris dans la plage située entre 10 à 45°, de préférence est de 30°.

3. Partie de tamisage selon la revendication 2, caractérisée en ce que la partie de tamisage comprend un dispositif d'enlèvement de la bande de matériau fibreux, vis-à-vis de la bande de tamisage, et de transfert dans une partie de pressage disposée en aval de la partie de tamisage.

4. Partie de tamisage selon l'une des revendications 2 à 3, caractérisée en ce que le dispositif de nettoyage de la bande de tamisage continue mise en circulation est disposé directement derrière l'endroit auquel, en fonctionnement normal, la bande de matériau fibreux est prélevée du tamis et est transférée dans un dispositif de pressage.

5. Partie de tamisage selon l'une des revendications 2 à 4, caractérisée en ce que le dispositif d'injection (**3, 20**) est un tube équipé de buses de formation de jets plats.

6. Partie de tamisage selon l'une des revendications 2 à 5, caractérisée en ce que la fente de soufflage (**23**) est une fente interrompue.

7. Partie de tamisage selon l'une des revendications 2 à 5, caractérisée en ce que la fente de soufflage est constituée d'une pluralité de perçages ou de fentes individuelles, placées en série les unes derrière les autres.

8. Partie de tamisage selon l'une des revendications 2 à 7, caractérisée en ce que la bande d'évacuation (**42**) présente, à l'endroit où le tamis (**1**) quitte la surface de guidage de tamis, un retrait (**47**) du genre d'un étagement.

9. Partie de tamisage selon l'une des revendications 2 à 8, caractérisée en ce que les deux surfaces de guidage de tamis des deux bandes (**41, 42**) ont sensiblement la même largeur (**A, B**), tandis que la largeur globale (**A**) de la bande d'amenée (**41**) est de 1,2 à 3 fois la largeur globale (**B**) de la bande d'évacuation (**42**).

10. Partie de tamisage selon l'une des revendications 2 à 9, dans laquelle les bandes (**41, 42**) reposent sur un corps support (**43**), caractérisée en ce que le corps support (**43**) - dans le but de modifier l'angle (**w**) fait entre le tamis (**1**) et la bande d'amenée (**41**) - est susceptible de pivoter autour d'un axe qui est parallèle par rapport à la fente de soufflage (**44**) et/ou en ce que le corps support (**43**) est susceptible d'être déplacé pour se rapprocher et s'éloigner du tamis (**1**).

11. Partie de tamisage selon l'une des revendications 2 à 10, caractérisée par les particularités ci-après :
11.1 le dispositif d'injection d'eau (**46'**) est constitué de deux chambres, parallèles entre elles et s'étendant transversalement par rapport à la direction de défilement du tamis, précisément une chambre de distribution (**48**) et une chambre à buses (**49**);
11.2 la chambre de distribution (**48**), à laquelle est raccordée une conduite d'amenée d'eau (**50, 66**), est reliée, par l'intermédiaire de plusieurs canaux (**51**) répartis sur la longueur des chambres (c'est-à-dire sur la largeur du tamis), à la chambre à buses (**49**) sur laquelle est prévue au moins une ouverture d'injection d'eau (**52**).

12. Partie de tamisage selon la revendication 11, caractérisée en ce que la chambre à buses (**49**) est placée directement avant la bande d'amenée (**41**) et en ce qu'est prévue une transition pratiquement continue entre l'ouverture d'injection d'eau (**52**) et la surface de guidage de tamis de la bande d'amenée (**41**).

13. Partie de tamisage selon l'une des revendications 11 ou 12, caractérisée en ce que la chambre à buses (**49**) présente, à titre d'ouverture d'injection d'eau (**52**), un interstice du genre d'une fente, dont l'ouverture libre est réglable.

14. Partie de tamisage selon l'une des revendications 1 à 13, caractérisée en ce que le dispositif d'injection d'eau (**46**) fournit dans la zone des deux bords de bande, par centimètre de largeur de bande, une quantité d'eau supérieure à ce qu'il fournit dans la zone centrale.

15. Partie de tamisage selon la revendication 14, caractérisée en ce que le dispositif d'injection d'eau (**46**) présente un tube d'injection (**56**) s'étendant sur toute la largeur du tamis et, en plus, dans la zone de chacun des deux bords de bande, un tube d'injection de bordure (**57**), déplaçable parallèlement à la fente de soufflage (**44**).

16. Partie de tamisage selon l'une des revendications 1 à 15, caractérisée par les propriétés ci-après :
(**a**) un dispositif de commande (**60, 64, 67**) est réalisé pour réguler la pression de l'air amené à la fente de soufflage (**44**) et/ou de l'eau amenée au dispositif d'injection (**64**);
(**b**) le dispositif de commande (**60, 64, 67**) est réalisé de manière à déclencher une augmentation de pression, au moment même ou peu avant le moment auquel le dispositif d'enlèvement (**37**) se soulève du tamis (**1**).

17. Partie de tamisage selon l'une des revendications 2 à 16, équipée d'un dispositif de commande (**64, 67**) pour la pression de l'air amené à la fente de soufflage (**44**) et/ou de l'eau amenée au dispositif d'injection (**64**), caractérisée en ce qu'est prévu un relais temporisé (**70**) qui déclenche à des intervalles de temps réglables une augmentation transitoire de la pression.
